**Europäisches Patentamt**

(19) **European Patent Office**

**Office européen des brevets**

(11) Numéro de publication: **0 119 914**
**B1**

## (12) FASCICULE DE BREVET EUROPÉEN

(45) Date de publication du fascicule du brevet:
**23.07.86**

(21) Numéro de dépôt: **84400489.5**

(22) Date de dépôt: **09.03.84**

(51) Int. Cl.⁴: **B 60 P 1/44**

(54) Dispositif de fermeture automatique de plateau de hayon élévateur.

(30) Priorité: **11.03.83 FR 8304196**

(43) Date de publication de la demande:
**26.09.84 Bulletin 84/39**

(45) Mention de la délivrance du brevet:
**23.07.86 Bulletin 86/30**

(84) Etats contractants désignés:
**AT BE CH DE FR GB IT LI NL SE**

(56) Documents cité:
**FR-A-912 303**
**US-A-3 233 758**

(73) Titulaire: **Bourgeois, Jacques, Route de Dampierre,**
**F-58310 Saint- Amand- en Puisaye (FR)**

(72) Inventeur: **Bourgeois, Jacques, Route de**
**Dampierre, F-58310 Saint- Amand- en Puisaye (FR)**

(74) Mandataire: **Phélip, Bruno, c/o Cabinet Harlé &**
**Phélip 21, rue de la Rochefoucauld, F-75009 Paris**
**(FR)**

LIBER, STOCKHOLM 1986

## Description

L'invention est du domaine des hayons éle-vateurs, notamment pour véhicules automobiles et véhicules destinés aux personnes handicapées. Elle vise plus précisément un dispositif de fermeture automatique de plateau de hayon élévateur, du type qui est constitué par un parallélogramme déformable sous l'action de moyens moteurs, par exemple mécaniques, électriques ou hydrauliques.

Jusqu'à présent, les fermetures de plateaux de hayons étaient généralement effectuées manuellement ou au moyen d'un mécanisme complexe et coûteaux. C'est ainsi que dans la technique antérieure, le brevet US—3 233 758 se rapporte à un dispositif élévateur pour hayon porteur arrière d'un véhicule de transport, ce dispositif étant constitué comme beaucoup d'autres dispositifs élévateurs déjà connus d'un parallélogramme déformable actionné par un vérin hydraulique. Par le brevet français 912 303, on connaît aussi un dispositif élévateur dans lequel le mouvement de basculement du plateau en position horizontale est limité par des bielles extensibles dont la longueur minimale réglable sert à faire varier l'orientabilité du plateau, et on notera que l'allongement de ladite bielle ne sert qu'à permettre de lever et fermer le plateau, mais n'assure en aucun cas cette fonction de façon automatique.

Un objet de la présente invention est de réaliser un dispositif permettant de relever et de fermer automatiquement le plateau d'un hayon élévateur, dispositif du type à parallélogramme et comportant au moins une bielle de longueur variable avec longueur minimum réglable, ce dispositif remédiant aux inconvénients précités des dispositifs élévateurs de la technique antérieure.

Un autre objet de la présente invention est de réaliser un dispositif de fermeture automatique de plateau de hayon, dont la longueur variable de la bielle est obtenue par le positionnement de ses axes d'articulation en des points respectifs du châssis et du dispositif, tels que ces points se rapprochent lors de la montée du hayon.

Un troisième objet de l'invention est de réaliser un dispositif de fermeture automatique de plateau de hayon, dont la bielle réglable est articulée d'une part au plateau élévateur et d'autre part à l'un des bras du parallélogramme, ou bien au bâti du hayon.

La présente invention a donc pour objet un dispositif de fermeture de plateau de hayon, actionné par des moyens moteurs et constitué par un parallélogramme déformable sous l'action desdits moyens moteurs le bras du parallélogramme destiné à supporter la plate-forme élévatrice se prolongeant au-delà de sont point d'articulation au bras adjacent inférieur, définissant ainsi un prolongement dont l'extrémité libre est articulée à ladite plate-forme élévatrice, ce dispositif comportant un élément d'articulation de longueur variable réglable, monté à pivotement, d'une part, sur la plate-forme élévatrice et, d'autre part, en un point approprié du châssis ou du bras supérieur du parallélogramme articulé, de façon telle que la distance entre ces deux points d'articulation de l'élément d'articulation de longueur variable diminue lors de la levée du hayon, jusqu'à ce que ledit élément d'articulation prenne sa position de longueur minimale et agisse ainsi comme une bielle fixe faisant pivoter automatiquement le plateau en fin de levée du hayon, et ce à partir d'une position déterminée par le réglage préalable en longueur de l'élément d'articulation.

Selon une forme de réalisation préférée de l'invention, l'élément d'articulation de longueur variable est réglable et constitué par une bielle de longueur variable avec longueur minimale réglable, cette bielle étant constituée par une tige coulissant dans un tube, tandis que sont prévus des moyens déplaçables et blocables sur la tige, par exemple un écrou, pour venir en butée contre le tube, la tige comportant avantageusement une section filetée pour le déplacement de l'écrou.

Dans une réalisation particulière de l'invention, les moyens moteurs sont avantageusement constitués par un vérin à simple effet du type plongeur, disposé sensiblement selon une diagonale du parallélogramme. Par ailleurs, selon une autre forme de réalisation particulère de l'invention, le bras inférieur du parallélogramme peut être de forme coudée, afin de permettre une déformation de ce dernier plus importante vers le bas en évitant de buter contre le carrosserie du véhicule.

D'autres caractéristiques et avantages de la présente invention apparaîtront à la lecture de la description suivante, d'une forme de réalisation non limitative de dispositifs de fermeture automatique de plateau et de hayon élévateur, en référence aux dessins annexés dans lesquels:

Figure 1 est une vue latérale du dispositif de l'invention, avec le hayon en position basse;

Figure 2 est une vue latérale du dispositif de l'invention, avec la plate-forme relevée jusqu'au niveau du plancher véhicule;

Figure 3 est une vue latérale du dispositif de l'invention, levé en phase de fermeture;

Figure 4 est une vue latérale du dispositif de l'invention à l'état complètement relevé;

Figure 5 est une vue latérale d'une variante de réalisation de la bielle réglable, dans laquelle l'écrou servant de butée a été remplacé par un tube ayant la même fonction;

Figure 6 représente une variante de réalisation du dispositif selon l'invention, dans lequel le bras inférieur du parallélogramme est coudé pour permettre une course de descente plus importante; et

Figure 7 est une variante du dispositif de la figure 6 avec le bras inférieur coudé, mais dont la bielle de longueur variable est articulée par une extrémité sur le bâti du hayon.

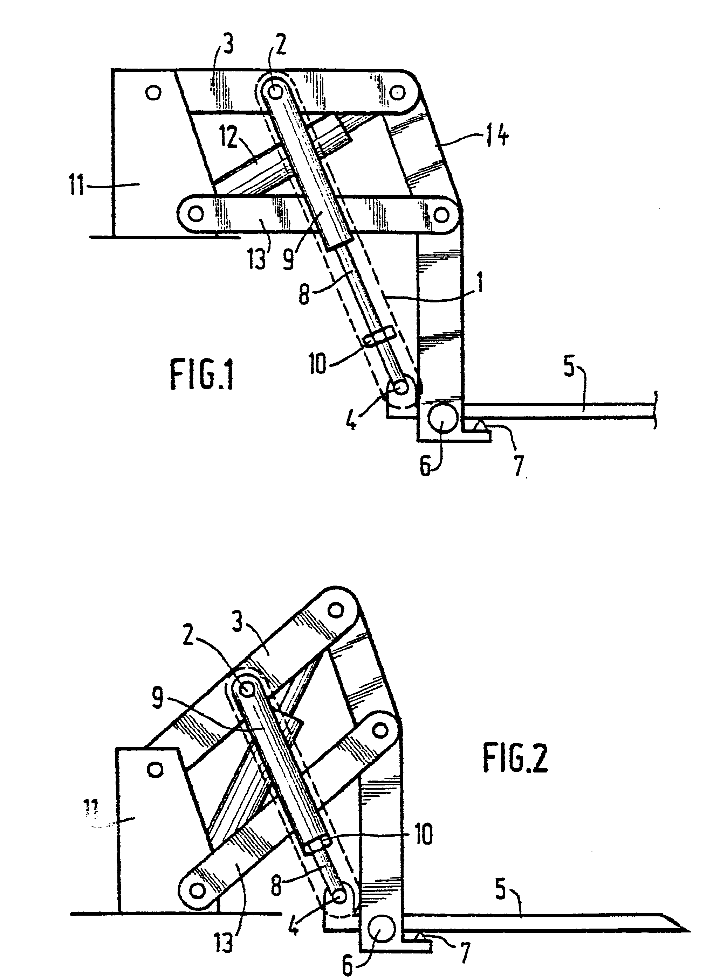

Dans la forme de réalisation représentée aux figures 1 à 4, le dispositif selon l'invention est constitué d'un parallélogramme déformable monté à pivotement sur le bâti 11 du hayon et constitué d'une bielle supérieure 3, d'une bielle inférieure 13 et d'une bielle coudée extérieure 14.

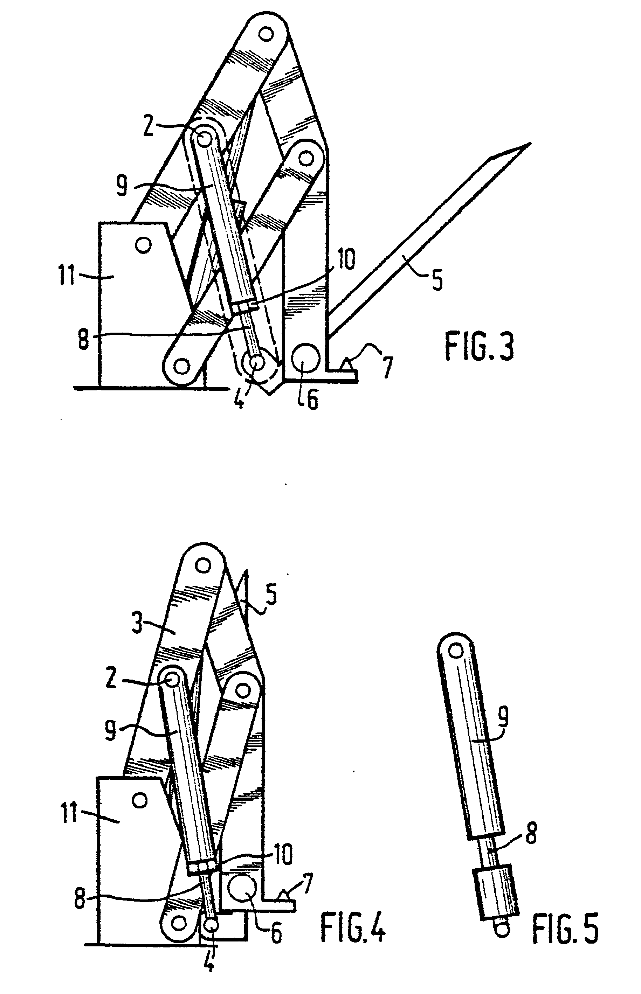

...allélogramme est actionné par un vérin ...lique (12), à simple effet du type plongeur, disposé sensiblement dans la diagonale du parallégramme et monté à pivotement et d'une part sur l'axe d'articulation entre la bielle 3 et la bielle 14 et d'autre part sur l'axe d'articulation entre la bielle 13 et le bâti 11. Une bielle 1, de longueur variable, qui est constituée d'une tige 8 coulissant dans le tube 9, est articulée d'une part, par une de ses extrémités, à un axe 2 solidaire du bras ou bielle 3 du parallélogramme déformable, et, à son autre extrémité, à un axe 4 solidaire de la plate-forme de hayon 5; cette dernière prenant appui sur une butée 7 peut pivoter autour de son axe 6 d'articulation à l'extrémité inférieure de la bie... ...oudée 14. La longueur de la bielle 1 est aj..... au moyen d'un écrou 10 venant se visser sur une partie filetée de façon correspondante de la tige 8, et destinée à venir en butée sur le tube 6, en position de fermeture complète du hayon comme représenté à la figure 4.

Comme on le voit sur la figure 2, la plate-forme 5 est relevée jusqu'au niveau du plancher du véhicule, tandis que la distance séparant les deux axes 2 et 4 a diminué pendant la montée du hayon. la tige 8 coulissant librement dans le tube ... ... bielle 1. On remarquera que tant que ... ...0 servant de butée n'entre pas en contact avec le tube 9, il n'y à aucune réaction sur l'axe 4 solidaire de la plate-forme 5, celle-ci restant en appui sur sa butée 7.

Sur la figure 3, le dispositif est représenté levé en phase de fermeture, avec la tige 8 en butée contre le tube 9 par l'intermédiaire de l'écrou 10, ce qui fait que la distance séparant les deux axes 2 et 4 ne peut plus diminuer, et qu'en conséquence la bielle 1, qui s'appuie sur l'axe 4 solidaire de la plate-forme 5, la fait pivoter autour de son axe 6 assurant ainsi son relevage et sa fermeture complète, dans l'état du dispositif représente complètement relevé comme à la figure 4.

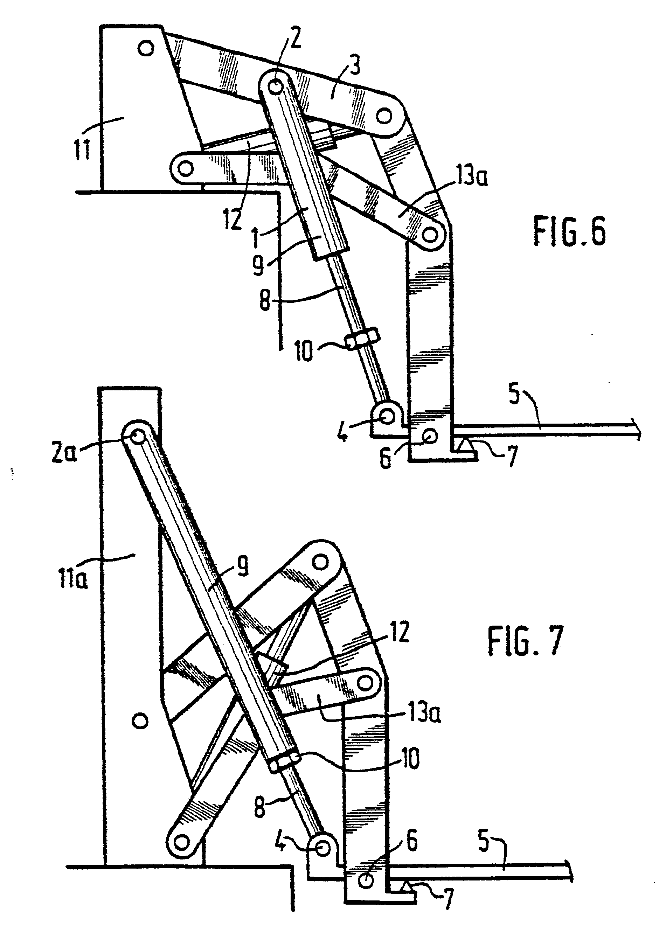

. La figure 5 représente une variante de réalisation de la bielle 1 avec son tube 9 et sa tige 8 inchangés, mais sur cette dernière l'écrou 10 est remplacé par un tube déplaçable et réglable 10a, se... ... également de butée à ladite bielle.

...ur la figure 6, est représentée une variante de réalisation du même type que celle des figures 1 à 4, si ce n'est que la bielle 13 a été remplacée par une bielle 13a coudée de façon à permettre une course de descente plus importante du dispositif, comme il apparaît clairement sur cette figure.

Dans une seconde variante de réalisation représentée à la figure 7, la bielle de longueur variable 9a ... plus grande dimension que la bielle 9, mais de ...figuration identique, est articulée à son extrémité supérieure sur un axe 2a solidaire du bâti du hayon 11a, tandis que son extrémité inférieure, qui demeure l'extrémité de la tige coulissante 8, est articulée comme précédemment sur un axe 4 solidaire du plateau 5.

Le dispositif de fermeture automatique de plateau de hayon élévateur selon l'invention, fonctionne de la manière suivante:

Pour faire monter le hayon de la position représentée par exemple aux figures 1 et 6, on actionne le vérin 12, qui déplace le parallélogramme vers le haut, ce qui fait que la distance entre les axes 2 et 4 d'extrémité de la bielle 1 diminue. Lorsque cette dernière est arrivée à sa longueur minimum, comme représenté par exemple à la figure 2 ou 7, qui est celle obtenue lorsque la plate-forme 5 vient sensiblement au niveau du plancher du véhicule, la bielle pousse sur l'axe 4 solidaire de la plate-forme 5, faisant pivoter cette dernière autour de son axe de pivotement 6, pour la fermer automatiquement (voir figures 3 et 4). Lors de la descente du hayon, la distance entre les deux axes 2, 4, sur lesquels sont articulés les deux extrémités de la bielle 1, augmente. Dans un premier temps, la plate-forme 5, pivotant sous l'effet d'une barre de torsion, d'un ressort ou de tout autre moyen de rappel (non représenté aux dessins), maintient la bielle à sa position la plus courte, jusqu'à ce que la plate-forme 5 vienne en appui sur sa butée 7 solidaire de l'extrémité inférieure de la bielle coudée 14. A partir de ce moment, la bielle 1 s'allonge en restant articulée sur les deux axes solidaires l'un, 2 ou 2a respectivement, d'un bras 3 du parallélogramme ou du bâti 11a, et l'autre 4 de pla plate-forme 5.

Ainsi se trouve résolu selon la présente invention, le problème de la fermeture automatique des plateaux de hayon, et ce grâce à la coopération entre un parallélogramme articulé et une bielle de longueur variable, dont la longueur minimum peut être préréglée, cette bielle étant articulée à une extrémité à un axe solidaire de la plate-forme située en-dehors de son axe de pivotement et de l'autre à un axe solidaire d'un des bras, dudit parallélogramme déformable ou du bâti du hayon lui-même ou encore du véhicule sur lequel est fixé le hayon en un point tel que les axes des deux extrémités de la bielle de longueur variable se rapprochent l'un de l'autre pendant la montée du hayon, ce qui fait qu'à une position de montée telle que le plateau arrive sensiblement au niveau du plancher du véhicule, la bielle atteint sa longueur minimum prédéterminée et ne pouvant plus se raccourcir agit, comme une bielle fixe, pendant la suite de la course constante du hayon sur l'axe solidaire du plateau le faisant pivoter autour de son axe de pivotement, et assurant ainsi la fermeture du plateau de hayon.

## Revendications

1. Dispositif de fermeture de plateau de hayon, notamment pour véhicules automobiles et de transport des handicapés, ce dispositif étant actionné par des moyens moteurs (12) et constitués par un parallélogramme déformable sous l'action desdits moyens moteurs (12), le bras (14) du parallélogramme destiné à supporter la plate-forme élévatrice (5) se prolongeant au-delà de sont point d'articulation au bras adjacent inférieur (13) dudit parallélogramme, définissant ainsi un prolongement dont l'extrémité libre est articulée à ladite plate-forme élévatrice (5), caractérisé en ce qu'il comporte un élément d'articulation (1) de longueur variable et réglable, monté à pivotement (en 4), d'une part, sur la plate-forme élévatrice (5) et d'autre part en un point approprié (2, 2a) du châssis du véhicule, du châssis du hayon (11a) ou du bras supérieur (3) du parallélogramme articulé, de façon que la distance entre les deux points d'articulation (2a, 4; 2, 4) de l'élément d'articulation (1) diminue lors de la levée du hayon (5), jusqu'à ce que l'élément d'articulation (1) prenne sa position de longueur minimale et agisse ainsi comme une bielle fixe faisant pivoter automatiquement le plateau en fin de levée du hayon, et ce à partir d'une position déterminée par le réglage préalable en longueur dudit élément d'articulation (1).

2. Dispositif selon la revendication 1, caractérisé en ce que l'élément d'articulation de longueur variable et réglable est constitué par une bielle (1) de longueur variable avec longueur minimale réglable.

3. Dispositif selon la revendication 1, caractérisé en ce que la bielle (1) de longueur variable est constituée par une tige (8) coulissant dans un tube (9).

4. Dispositif selon l'une quelconque des revendications 1 et 2, caractérisé en ce que, pour le réglage de la longueur minimale de la bielle (1), sont prévus des moyens déplaçables et blocables sur la tige (8) et susceptibles de venir en butée contre le tube (9).

5. Dispositif selon la revendication 4, caractérisé en ce que les moyens de butée sont constitués par un écrou (10) ou un tube (10a) déplaçable sur une section filetée de façon correspondante de la tige (8).

6. Dispositif selon l'une quelconque des revendications 1 à 5, caractérisé en ce que les moyens moteurs sont constitués par un vérin (12) à simple effet, du type plongeur.

7. Dispositif selon l'une quelconque des revendications 1 à 6, caractérisé en ce que la bielle inférieure (13a) du parallélogramme articulé est coudée de façon à permettre une course de descente plus importante du dispositif élévateur.

## Patentansprüche

1. Schließvorrichtung für eine Hebebühne, insbesondere für Kraftfahrzeuge und für den Transport von Behinderten, wobei die Vorrichtung durch Motoreinrichtungen (12) betätigt ist und aus einem Parallelogramm besteht, welches bei Tätigkeit dieser Motoreinrichtungen (12) verformbar ist, der Parallelogrammarm (14), der zur Halterung der Hebeplattform (5) bestimmt ist, sich jenseits seines Gelenkpunktes am unteren Nachbararm (13) des Parallelogramms verlängert, wobei also eine Verlängerung seines freien Endes gebildet wird, und er an der Hebeplattform (5) angelenkt ist, dadurch gekennzeichnet, daß sie ein Gelenkelement (1) veränderbarer und einstellbarer Länge aufweist, welches zum Schwenken (bei 4) einerseits an der Hebebühne (5) und andererseits an einem geeigneten Punkt (2, 2a) des Fahrzeugrahmens angebracht ist, und zwar für den Heberahmen (11a) oder den oberen Arm (3) des Gelenkparallelogramms derart, daß der Abstand zwischen den beiden Gelenkpunkten (2a, 4; 2, 4) des Gelenkelementes (1) beim Anheben der Bühne (5) abnimmt, bis das Gelenkelement (1) seine Position minimaler Länge annimmt und somit wie eine feste Pleuelstange wirkt, welche die Bühne zum Anheben selbsttätig schwenken läßt, und dies von einer Position aus, die durch die vorherige Längeneinstellung des Gelenkelements (1) bestimmt ist.

2. Vorrichtung nach Anspruch 1, dadurch gekennzeichnet, daß das Gelenkelement variabler und einstellbarer Länge durch eine Pleuelstange (1) veränderbarer Länge mit minimal einstellbarer Länge gebildet ist.

3. Vorrichtung nach Anspruch 1, dadurch gekennzeichnet, daß die Pleuelstange (1) veränderbarer Länge durch einen in einem Rohr (9) verschiebbaren Schaft (8) gebildet ist.

4. Vorrichtung nach einem der Ansprüche 1 und 2, dadurch gekennzeichnet, daß zum Einstellen der minimalen Länge der Pleuelstange (1) auf dem Schaft (8) verfahrbare und blockierbare Mittel vorgesehen sind, die gegen das Rohr (9) in Anschlag kommen können.

5. Vorrichtung nach Anspruch 4, dadurch gekennzeichnet, daß die Anschlagmittel durch eine Mutter (10) oder ein Rohr (10a) gebildet sind, die bzw. das auf einem Gewindeabschnitt entsprechend dem Schaft (8) verschiebbar ist.

6. Vorrichtung nach einem der Ansprüche 1 bis 5, dadurch gekennzeichnet, daß die Motormittel durch eine Hebevorrichtung (12) mit einfacher Wirkung nach Art eines Tauchkolbens gebildet sind.

7. Vorrichtung nach einem der Ansprüche 1 bis 6, dadurch gekennzeichnet, daß die untere Pleuelstange (13a) des Gelenkparallelogramms derart gekrümmt bzw. gekröpft ist, daß ein größeres Absenken der Hebevorrichtung möglich ist.

## Claims

1. Device for closing a tailgate, especially for motor vehicles and vehicles for transporting the handicapped, this device being actuated by drive means (12) and consisting of a parallelogram deformable under the action of the said drive means (12), the arm (14) of the parallelogram, intended for supporting the lift platform (5), being extended beyond its point of articulation on the adjacent lower arm (13) of the said parallelogram, thus defining an extension, the free end of which is articulated on the said lift platform (5), characterized in that it comprises an articulation element (1) of variable and adjustable length, mounted pivotally (at 4) at one end on the lift platform (5) and at the other end at a suitable point (2, 2a) on the vehicle chassis, on the frame of the tailgate (11a) or on the upper arm (3) of the articulated parallelogram, in such a way that the distance between the two points of articulation (2a, 4; 2, 4) of the articulation element (1) decreases when the tailgate (5) is lifted, until the articulation element (1) assumes its position of minimum length and thus acts as a fixed link causing the tailgate to pivot automatically at the end of the lift of the latter, this taking place from a position determined as a result of previous adjustment of the length of the said articulation element (1).

2. Device according to Claim 1, characterized in that the articulation element of variable and adjustable length consists of a link (1) of variable length with an adjustable minimum length.

3. Device according to Claim 1, characterized in that the link (1) of variable length consists of a rod (8) sliding in a tube (9).

4. Device according to either one of Claims 1 and 2, characterized in that, to adjust the minimum length of the link (1), are provided means which are displaceable and lockable on the rod (8) and which are capable of coming in abutment against the tube (9) to stop it.

5. Device according to Claim 4, characterized in that the stop means consist of a nut (10) or a tube (10a) displaceable along a correspondingly threaded section of the rod (8).

6. Device according to any one of Claims 1 to 5, characterized in that the drive means consist of a single-acting jack (12) of the plunger type.

7. Device according to any one of Claims 1 to 6, characterized in that the lower link (13a) of the articulated parallelogram is bent, to allow the lifting device to execute a longer descending travel.

0 119 914

FIG.1

FIG.2

FIG.3

FIG.4

FIG.5

0 119 914

FIG.6

FIG. 7

5